# FASCICULE DE BREVET EUROPEEN

(11) **EP 1 866 990 B1**
(45) Date de publication et mention de la délivrance du brevet: **16.10.2013**
(21) Numéro de dépôt: 06723574.7
(22) Date de dépôt: 21.03.2006
(51) Int. Cl.: H01M 8/02, H01M 8/10

(54) **PlLE A COMBUSTIBLE A MEMBRANE POLYMERE**
POLYMERMEMBRAN-BRENNSTOFFZELLE
POLYMER MEMBRANE FUEL CELL

(30) Priorité: 25.03.2005 FR 0503057
(43) Date de publication de la demande: 19.12.2007
(73) Titulaire: Michelin Recherche et Technique S.A., 1763 Granges-Paccot (CH)
(72) Inventeur: DELFINO, Antonio, CH-1772 Grolley (CH); OLSOMMER, David, CH-1801 Le Mont Pelerin (CH)
(74) Mandataire: Lasson, Cédric Y. M.
(86) Numéro de dépôt international: PCT/EP2006/002560
(87) Numéro de publication internationale: WO 2006/100029

(56) Documents cités:
- EP-A- 0 083 192
- EP-A- 1 061 598
- WO-A-00/05775
- WO-A-99/27601
- FR-A- 2 836 285
- US-A- 5 789 093

## Description

### DOMAINE DE L'INVENTION

La présente invention concerne les piles à combustible à membrane polymère. Plus particulièrement, elle concerne les plaques bipolaires installées entre chacune des cellules électrochimiques élémentaires et les plaques d'extrémité installées de part et d'autre de l'empilage des différentes cellules électrochimiques.

### ETAT DE LA TECHNIQUE

Les plaques bipolaires utilisées dans les piles à combustible remplissent deux fonctions très différentes. On sait qu'il faut alimenter la pile en gaz carburant et en gaz comburant, c'est-à-dire en l'hydrogène et en air ou en oxygène pur, et qu'il faut également la refroidir, c'est-à-dire la faire traverser par un fluide de refroidissement comme de l'eau. L'une des fonctions des plaques bipolaires est de permettre l'acheminement de ces différents fluides nécessaires au fonctionnement de la pile à combustible. Par ailleurs, les plaques bipolaires remplissent également une fonction électrique : assurer la conduction électrique entre l'anode et la cathode de chacune des cellules électrochimiques adjacentes. En effet, une pile à combustible est toujours constituée par l'assemblage en série d'un grand nombre de cellules électrochimiques élémentaires, la tension nominale de la pile étant obtenue par connexion électrique en série du nombre requis de cellules électrochimiques élémentaires.

Ces différentes fonctions, acheminer les fluides et conduire l'électricité, donnent le cahier des charges auquel doivent satisfaire les matériaux utilisés pour la réalisation de ces plaques bipolaires. Les matériaux utilisés doivent présenter une très grande conductibilité électrique. Les matériaux utilisés doivent aussi être étanches aux fluides utilisés et faire preuve d'une très grande stabilité chimique vis-à-vis de ces fluides.

En outre, les plaques bipolaires doivent présenter les caractéristiques mécaniques suffisantes pour permettre la superposition d'un grand nombre de cellules électrochimiques élémentaires et plaques bipolaires associées et le maintien de l'ensemble par compression entre des plaques d'extrémité grâce à des tirants. Les plaques bipolaires doivent présenter des caractéristiques mécaniques suffisantes pour supporter cette compression. Le graphite est couramment utilisé car ce matériau offre tout à la fois une grande conductibilité électrique et est chimiquement inerte aux fluides utilisés. La demande de brevet WO 2005/006472 montre une réalisation possible de telles plaques bipolaires. On voit qu'elles sont constituées par la superposition de deux plaques en graphite relativement rigides avec interposition d'une feuille réalisée en matière graphite assez souple afin de s'accommoder des tolérances d'épaisseur des différentes couches. Les plaques en graphites comportent les réseaux de canaux nécessaires à la distribution des gaz carburant et en gaz comburant, c'est-à-dire en l'hydrogène et en air ou en oxygène pur, et le réseau de canaux permettant de faire traverser chaque plaque bipolaire par un fluide de refroidissement comme de l'eau.

Malheureusement, les éléments rigides participant à la constitution des plaques bipolaires en graphite sont assez fragiles aux chocs, en particulier pendant les manipulations lors de l'assemblage de la pile. La couche réalisée en matériau graphite souple, dont il a été fait état précédemment, est en outre tout particulièrement difficile à manipuler de façon industrielle. Tout ceci obère de façon importante les coûts de fabrication de telles plaques bipolaires.

Le brevet US 6,379,476 propose de réaliser des plaques bipolaires en acier inoxydable revêtu d'un film passivé en surface et ayant des inclusions en carbure faisant protubérance à la surface. Selon le déposant de ce brevet, le produit proposé devrait présenter une résistance électrique de contact suffisamment basse pour en faire des plaques bipolaires. Cependant, si cette solution peut présenter quelques avantages par rapport aux plaques bipolaires entièrement réalisées en graphite, notamment quant aux propriétés mécaniques, elle reste complexe à mettre en oeuvre et la résistivité électrique peut s'avérer trop importante surtout s'il on vise à atteindre une très grande densité de puissance pour la pile à combustible.

La demande de brevet WO 00/05775 propose de réaliser des plaques bipolaires en un matériau polymère ayant une bonne tenue mécanique jusqu'à des températures élevées, présentant une bonne tenue physico-chimique dans une atmosphère oxydante en présence de vapeur d'eau ou de condensats pouvant comporter des traces acides, la conduction électrique au travers de la plaque bipolaire étant assurée par des cylindres métalliques traversant des plaques polymères et faisant saillie sur chacune des faces pour pénétrer à l'intérieur des électrodes situées de part et d'autre de chaque plaque polymère. Cette divulgation ne traite pas du problème de refroidissement de la plaque bipolaire.

La demande de brevet FR 2 836 385 décrit une plaque bipolaire formée par deux plaques de distribution des gaz carburant et comburant réalisées en matériau non métallique, maintenues espacées l'une de l'autre afin d'aménager entre elles des canaux de circulation d'un fluide caloporteur. La collecte du courant formé par chaque cellule électrochimique est assurée par deux éléments disposés de chaque côté de chaque plaque bipolaire, par-dessus les plaques non métalliques de distribution des gaz. Chaque élément comporte suffisamment de perçages pour pouvoir être traversé par le gaz. Les éléments sont électriquement connectés dans chaque plaque bipolaire. Au vu de la description de cette demande de brevet, on se rend compte que la connexion électrique est de nature artisanale, complexe à réaliser. Dans l'un des modes de réalisation, la connexion électrique est assuré par des intercalaires en cuivre maintenant écartées les plaques non métalliques de distribution des gaz. En variante, il est proposé d'assurer ces connexions électriques à l'extérieur des plaques. Dans tous les cas, cela requiert des pièces complexes, des soudures, et rend la structure lourde, volumineuse, très coûteuse à réaliser.

L'objectif de la présente invention est de proposer un agencement pour plaque bipolaire ou pour plaque d'extrémité qui soit aussi facile à fabriquer que possible, qui permette d'atteindre de très hauts rapports de puissance délivrée par rapport au poids et à l'encombrement de la pile à combustible, c'est-à-dire qui permette notamment le refroidissement par un liquide caloporteur, afin de rendre l'utilisation de la pile à combustible dans un véhicule automobile nettement plus aisée.

### BREVE DESCRIPTION DE L'INVENTION

L'invention propose une plaque de distribution ayant une première face destinée à être mise en contact avec une membrane de diffusion de l'un des gaz utilisé par une pile à combustible, ayant une seconde face opposée à la ladite première face, ladite plaque de distribution présentant une épaisseur donnée et présentant une section utile destinée à être installée en regard d'une membrane échangeuse d'ions, comportant sur la première face une rainure formant un premier canal de distribution pour l'un des gaz, ledit premier canal de distribution étant sensiblement réparti sur toute la section utile de ladite première face, caractérisée en ce que ladite plaque de distribution est formée d'un support structurel non conducteur de l'électricité au moins en surface et inerte chimiquement au moins en surface, en ce que ladite plaque de distribution comporte des pions pénétrant dans le support structurel, la projection desdits pions sur ladite première face ne recoupant pas ledit premier canal, lesdits pions étant réalisés en matériau non métallique conducteur de l'électricité.

Bien entendu, si l'on ne fait état ci-dessus que d'un seul canal de distribution de gaz, ce qui évoque en particulier les plaques de distribution utilisées aux extrémités d'une pile à combustible, l'invention concerne tout autant les plaques bipolaires insérées entre deux cellules électrochimiques adjacentes et couplées électriquement en série via lesdites plaques bipolaires. Dans ce cas, l'invention s'étend à une plaque de distribution formant plaque bipolaire, la seconde face étant cette fois destinée à être mise en contact avec une membrane de diffusion de l'autre des gaz utilisé par une pile à combustible, la seconde face comportant une rainure formant un deuxième canal de distribution pour l'autre des gaz, ledit deuxième canal de distribution étant sensiblement réparti sur toute la section utile à la seconde face.

Avantageusement, pour assurer le refroidissement de la plaque de distribution, la plaque de distribution selon l'invention, en particulier lorsqu'elle constitue une plaque bipolaire, comporte dans son épaisseur un canal interne ayant un tracé parcourant sensiblement toute la section utile et ne débouchant ni sur la première face ni sur la seconde face dans ladite section utile, pour la circulation d'un fluide de refroidissement.

L'invention propose ainsi de séparer les fonctions d'acheminement de fluides d'une part et de conduction électrique d'autre part, dans les plaques de distribution, en particulier les plaques bipolaires. Pour le support structurel, l'invention fait le choix d'un matériau inerte ou rendu inerte chimiquement aux fluides utilisés, au moins en surface, plus précisément au moins pour la surface en contact avec lesdits fluides. En effet, il est très important que la surface du matériau ne soit pas attaquée par l'hydrogène, par l'oxygène, par l'eau qui se reforme, par toute autre substance véhiculée dans les canaux, et en particulier que le matériau reste inerte en surface aux conditions sévères régnant dans une pile à combustible en fonctionnement. En outre et toujours en ce qui concerne le support structurel, là encore au moins en surface, il est choisi de façon à être non conducteur de l'électricité ou très peu conducteur. C'est en particulier intéressant pour toutes les surfaces en contact avec le fluide de refroidissement dans une plaque bipolaire refroidie. Cela dispense le fluide de refroidissement d'être non conducteur de l'électricité.

Les propriétés mécaniques du matériau choisi pour le support structurel sont adaptées aux sollicitations mécaniques dues au procédé de fabrication et aussi celles survenant en service. Afin qu'il soit non conducteur de l'électricité au moins en surface, on peut adopter un matériau non conducteur de l'électricité dans tout son volume, comme une matière plastique. Cependant, afin d'optimiser la conduction thermique en particulier pour réaliser une plaque bipolaire, on choisit de préférence un matériau métallique, traité de façon appropriée pour répondre à l'exigence de surface non conductrice et suffisamment inerte chimiquement.

La conductivité électrique nécessaire à la fonction électrique d'une plaque de distribution, en particulier dans sa forme bipolaire, est assurée par un nombre suffisant de pions en matériau conducteur, traversant toute l'épaisseur de la plaque et de préférence répartis sur toute sa surface. Ainsi, les pions sont réalisés dans un matériau compris dans le groupe comportant le graphite, un polymère fortement chargé de noir de carbone et un polymère chargé de fibres courtes de noir de carbone. Le groupe peut aussi contenir un polymère chargé de poudre métallique à condition qu'il n'y ait pas en surface de poudre métallique, ce qui requiert par exemple un processus de fabrication à deux injections successives.
Par exemple, on réalise une plaque bipolaire en deux plaques de distribution superposées, ceci n'étant pas limitatif. L'une de ces plaques de distribution comporte un canal d'acheminement d'un des gaz et l'autre de ces plaques de distribution comporte un canal d'acheminement de l'autre des gaz sur une de ses faces et un canal destiné à faire traverser le fluide de refroidissement sur l'autre de ses faces. Les plaques de distribution sont superposées en disposant le canal pour le fluide de refroidissement au centre, d'où l'appellation de « canal interne ».

Le support structurel pour la plaque peut être une matière plastique, ou peut être de l'aluminium rendu inerte aux agressions chimiques des fluides utilisés. On sait en effet passiver une plaque en aluminium et il est bien connu qu'un tel revêtement de passivation rend l'aluminium non conducteur car il forme un oxyde d'aluminium.

On a percé avant assemblage chacune des plaques de distribution ou bien on peut ensuite percer après assemblage la plaque bipolaire ainsi réalisée d'une multitude de perçages de très petit diamètre dans les zones où on ne croise pas les canaux. On peut ensuite insérer dans ces perçages des pions en matériau conducteur. Il faut donc s'arranger pour que le tracé des premier et deuxième canaux et du canal interne laissent, dans la section utile, des zones permettant de réaliser de tels perçages de sorte que ces perçages soient eux aussi répartis sur toute la section utile et forment une section cumulée suffisante compte tenu de l'intensité maximale du courant que délivrera la pile à combustible. Notons que la section des perçages peut être tout autre que circulaire, par exemple carrée, ou ovale, que les sections des différents perçages peuvent être de formes différentes ou de diamètres ou dimensions différentes.

Le matériau utilisé pour les pions peut être du graphite, même sans qualités mécaniques particulières. Notons qu'il est toutefois utile qu'il présente une bonne insensibilité chimique vis-à-vis des fluides car ses extrémités seront en contact avec les gaz utilisées et avec l'eau reformée de par le contact sur les membranes de diffusion de chaque cellule électrochimique, ce que l'on ne peut obtenir sans traitement particulier avec les matériaux métalliques.

La description suivante décrit en détails une plaque bipolaire. Bien entendu comme déjà dit, l'invention ne se limite pas aux plaques bipolaires ; elle s'étend aussi aux plaques de distribution disposées de part et d'autre de l'empilage des cellules élémentaires. Aux extrémités, la plaque de distribution est très semblable à la première plaque de distribution décrite ci-dessous car, à chacune des extrémités, il ne faut diffuser que l'un des deux gaz utilisés par la pile à combustible et il est en général inutile de prévoir un canal interne de refroidissement.

### BREVE DESCRIPTION DES FIGURES

La présente invention sera mieux comprise grâce à la description détaillée d'un mode de réalisation illustré avec les figures jointes dans lesquelles :
La figure 1 est un éclaté montrant les différents éléments constitutifs d'une plaque bipolaire selon l'invention ;
La figure 2 montre une plaque bipolaire selon l'invention telle qu'elle apparaît lorsqu'elle est assemblée ;
La figure 3 montrant un support structurel d'une variante de réalisation ;
La figure 4 montre un dispositif d'injection des pions de ladite une variante de réalisation ;
La figure 5 montre un contre moule utilisé dans le dispositif d'injection de la figure 4 ;
La figure 6 montre une plaque bipolaire selon ladite variante de réalisation.

### DESCRIPTION DES MODES DE REALISATION PREFERES DE L'INVENTION

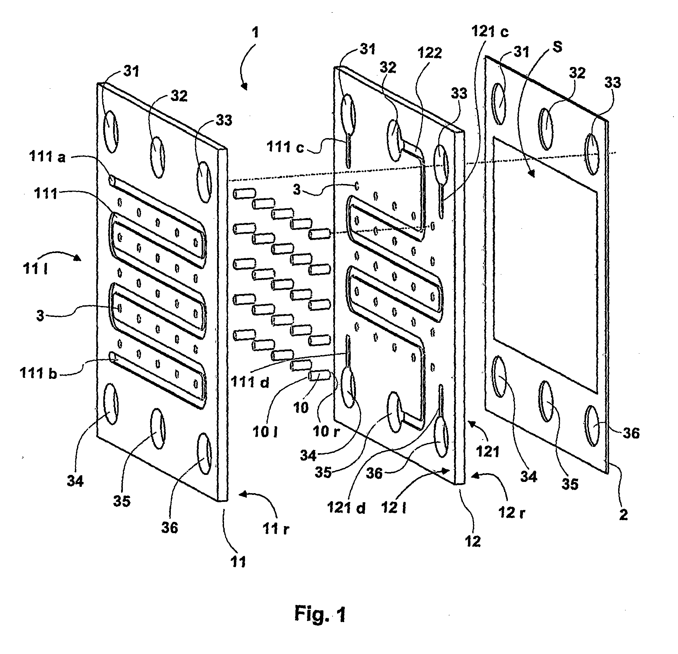

A la figure 1, on voit une plaque bipolaire 1 constituée par l'assemblage d'une première plaque de distribution 11 et d'une seconde plaque de distribution 12. La plaque bipolaire 1 est destinée à être associée à des éléments formant une cellule électrochimique 2. On sait qu'une cellule électrochimique 2 élémentaire est à l'heure actuelle (sans que ceci ne limite en aucune façon l'invention) habituellement constituée de la superposition de cinq couches : une membrane polymère échangeuse d'ions, deux électrodes comportant des éléments chimiques nécessaires au déroulement de la réaction électrochimique, comme par exemple du platine, et deux couches de diffusion des gaz permettant d'assurer une diffusion homogène des gaz acheminés par les réseaux des plaques bipolaires sur la totalité de la surface de la membrane échangeuse d'ions. On repère sur la cellule électrochimique 2 de la figure 1 une surface correspondant à la section utile S de la pile à combustible, c'est-à-dire la zone qui est le siège de la réaction électrochimique permettant de produire de l'électricité.

La première plaque de distribution 11, la deuxième plaque de distribution 12 et la cellule électrochimique 2 comportent d'un côté une zone présentant trois ouvertures 31, 32 et 33 de section relativement importante, ainsi que sur le côté opposé une autre zone présentant également trois ouvertures 34, 35 et 36 de section relativement importante. Toutes les ouvertures 31 sont alignées d'une plaque de distribution 11 à l'autre 12 et des plaques de distribution 11 et 12 à la cellule électrochimique 2. De même, toutes les ouvertures 32, respectivement 33, 34, 35 et 36 sont alignées d'une plaque de distribution 11 à l'autre 12 et des plaques de distribution 11 et 12 à la cellule électrochimique 2. L'ensemble des ouvertures 31, respectivement 33, forme une nourrice pour l'acheminement d'un des gaz : les ouvertures 31 et 33 acheminent les unes (par exemple 31) l'hydrogène et les autres (par exemple 33) l'oxygène. L'ensemble des ouvertures 34, respectivement 36, forme une nourrice pour le retour d'un des gaz : les ouvertures 34 et 36 assurent le retour les unes (34) de l'hydrogène non consommé par la pile et les autres (36) de l'oxygène non consommé par la pile. Toutes les ouvertures 32 forment une nourrice qui achemine le fluide de refroidissement tandis que toutes les ouvertures 35 forment une nourrice qui assure le retour du fluide de refroidissement servant à réguler la pile à combustible en température.

L'une des faces 11l de la première plaque de distribution 11 comporte un premier canal de distribution 111 tracé pour répartir sur la totalité de la section utile S de la première plaque 11 l'un des deux gaz utilisés par la pile à combustible. Le premier canal de distribution 111 débute par un orifice 111 a traversant l'épaisseur de la première plaque de distribution 11, et se termine par un orifice 111b traversant lui aussi la première plaque de distribution 11.

L'une des faces 12l de la seconde plaque de distribution 12 comporte un canal interne 122, tracé pour répartir sur la totalité de la section utile S de la seconde plaque de distribution 12 le fluide de refroidissement utilisé pour réguler la pile à combustible en température. L'orifice 111 a est aligné avec le bout d'un tronçon de canal 111c creusé sur la face 12l pour communiquer avec ledit canal 111c. L'orifice 111 b est aligné avec le bout d'un tronçon de canal 111 d creusé sur la même face 12l, pour communiquer avec ledit canal 111d. Chacun de ces tronçons de canal 111c et 111d communique avec les ouvertures 31 et 34. Ceci assure la communication entre le premier canal de distribution 111 et les nourrices concernées.

Sur l'autre 12r de ces faces, non visible à la figure 1, la seconde plaque 12 présente un deuxième canal de distribution 121 (non visible, semblable au canal de distribution 111 et lui aussi tracé pour répartir sur la totalité de la section utile de la seconde plaque de distribution 12 l'autre des deux gaz utilisés par la pile à combustible). Les ouvertures 33 et 36 de la seconde plaque de distribution 12 sont en communication avec, respectivement, un tronçon de canal 121c et avec un tronçon de canal 121d creusés tout deux sur la face 121. Chacun des tronçons de canal 121c et 121d se termine par un orifice (non visible à la figure 1) traversant l'épaisseur de la seconde plaque de distribution 12, pour mettre en communication le deuxième canal 121 avec les nourrices concernées.

On voit que la première plaque de distribution 11 et la seconde plaque de distribution 12 comportent un grand nombre de perçages 3. Les perçages 3 réalisés sur la première plaque de distribution 11 et les perçages 3 réalisés sur la seconde plaque de distribution 12 sont alignés. On peut observer que les perçages 3 sont réalisés de façon à ne jamais couper aucune des canalisations 111, 121 et 122 aménagées sur chacune des première 11 et seconde 12 plaques de distribution.

A la figure 1, on voit également les pions 10 destinés à être introduits dans chacun des perçages 3. Ces pions sont formés par de petits cylindres réalisés par exemple en graphite. Il est possible de réaliser un grand nombre de perçages, par exemple une centaine, sur la surface d'une plaque de distribution sans jamais croiser les canaux de distribution de gaz ou le canal interne prévu pour la circulation du fluide de refroidissement. La section de chacun de ces perçages est par exemple de l'ordre de 1 mm². Ainsi, on voit que la section cumulée de l'ensemble des pions va permettre de passer les courants de service importants tels que développés dans une pile à combustible.

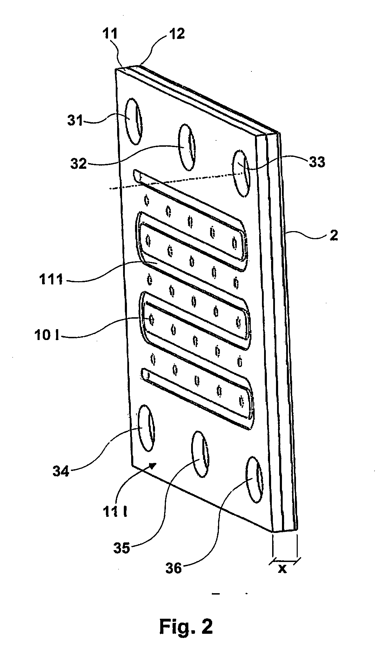

La figure 2 montre une plaque bipolaire 1 selon l'invention après assemblage des différents éléments (plaques de distribution 11 et 12 et pions 10) présentés avec l'aide de la figure 1. Cet assemblage peut se faire par exemple par collage des plaques de distribution l'une sur l'autre, puis par emmanchement en force des pions 10, afin d'assurer une bonne étanchéité entre les canaux de distribution entre eux et vis-à-vis du canal interne, et entre les faces 111 et 11r afin de ne pas mélanger les gaz. Les pions 10 débouchent de part et d'autre sur chacune desdites première et seconde face dans la section utile.

Chacune des faces 11l et 11r d'une telle plaque bipolaire peut coopérer avec une des couches de diffusion des cellules électrochimiques 2 adjacentes. La figure 2 montre une plaque bipolaire 1, d'épaisseur x, associée à une cellule électrochimique élémentaire 2. On superpose un grand nombre de cellules électrochimiques 2 avec interposition de plaques bipolaires 1, et on dispose aux extrémités des plaques de distributions simples (non bipolaires) pour former une pile à combustible.

Ainsi, grâce à l'invention, on peut choisir comme matériau constitutif de base de chacune des plaques élémentaires un matériau présentant des caractéristiques mécaniques suffisantes pour permettre non seulement la transmission des sollicitations de service pour la pile à combustible, mais également pour permettre l'automatisation de la fabrication des plaques bipolaires. En effet, une telle automatisation suppose des manipulations par des robots de fabrication et si ces manipulations requièrent peu de précautions grâce à la solidité du matériau constitutif des plaques de base, la réalisation de la fabrication automatique n'en sera que plus simple, plus robuste et plus économique. Pour ce premier exemple de réalisation, chacune des plaques élémentaires est réalisée d'un seul bloc formant support structurel. Le support structurel peut être réalisé soit en matière plastique ou, de préférence, pour favoriser l'échange thermique, en aluminium, anodisé et recouvert de polytétrafluoroéthylène (PTFE) en surface pour répondre à l'exigence de surface non conductrice et améliorer son caractère inerte chimiquement.

La conduction électrique d'une cellule électrochimique 2 à l'autre est assurée uniquement par les pions 10, dont on voit l'une des extrémités 101 affleurant sur la face 11l de la plaque bipolaire 1 à la figure 2. La concentration de la fonction électrique sur une surface réduite par rapport à la section utile S permet malgré tout de transmettre les courants de service sans atteindre une densité de courant trop élevée. Ainsi, la concentration de la partie conductrice sur une petite partie de la surface des plaques utilisées, typiquement moins de 10 % de la totalité de la section utile, permet d'aménager le tracé des canaux de distribution et canal interne sans difficulté particulière.

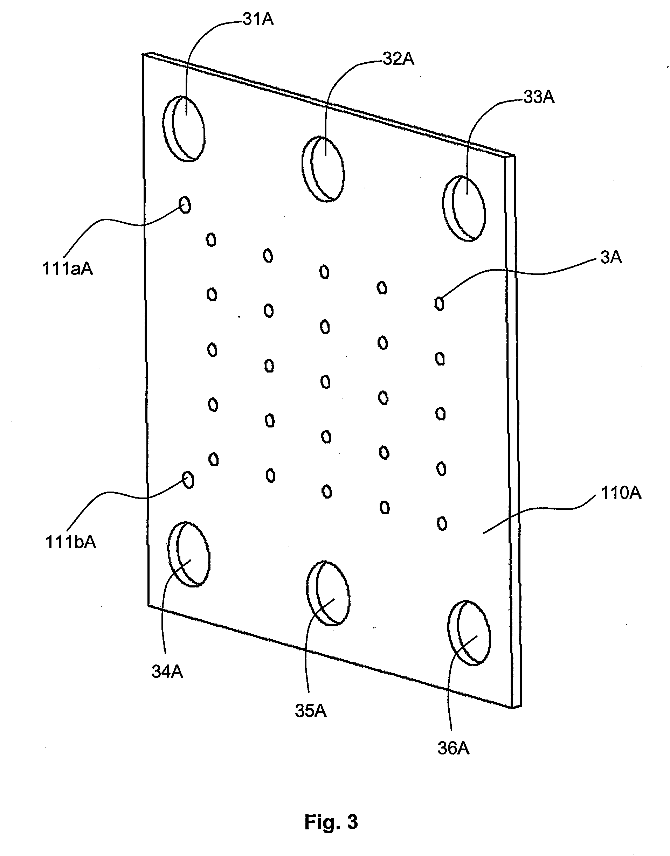

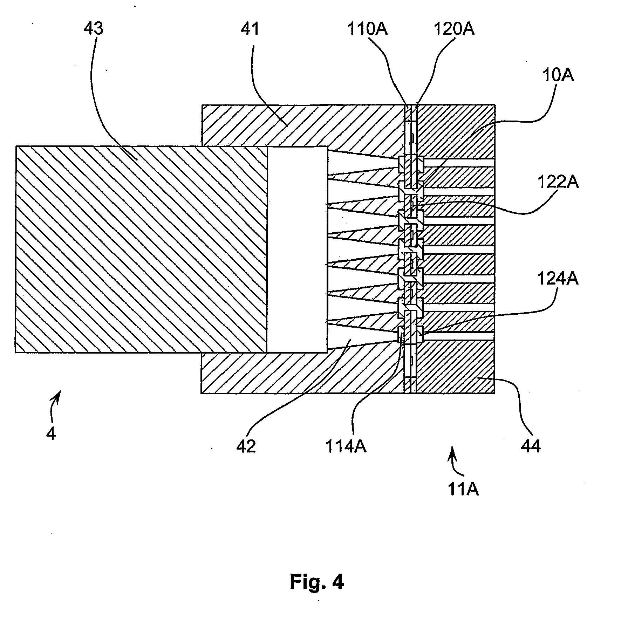

Examinons maintenant une variante de réalisation de l'invention, illustrée au moyen des figures 3 et suivantes. Dans cette variante, les pions 10A (voir figure 4) sont réalisés dans un matériau injectable et la plaque de distribution comporte, du côté de la première face, une couche de surface réalisée dans le même matériau que les pions. La couche de surface est surmoulée sur le support structurel par la même opération d'injection permettant de réaliser les pions, de sorte que la couche de surface et les pions forment un milieu continu favorisant la conduction électrique.

Pour injecter les pions (et donc la couche de surface dans l'exemple décrit ici), on peut utiliser une pâte ayant comme composants principaux du noir de carbone et un polymère fluoré thermodurcissable ou thermoplastique, par exemple le polyvinylidiène fluoride PVDF. Les proportions de carbone et de polymère sont d'au moins 70% en poids de noir de carbone et de préférence 80%, le complément étant le polymère. La quantité de carbone doit être suffisante pour que la résistance électrique de surface du pion soit aussi petite que possible. Le polymère, quant à lui, doit assurer le liant nécessaire, résister à la corrosion et être facilement extrudable et injectable.

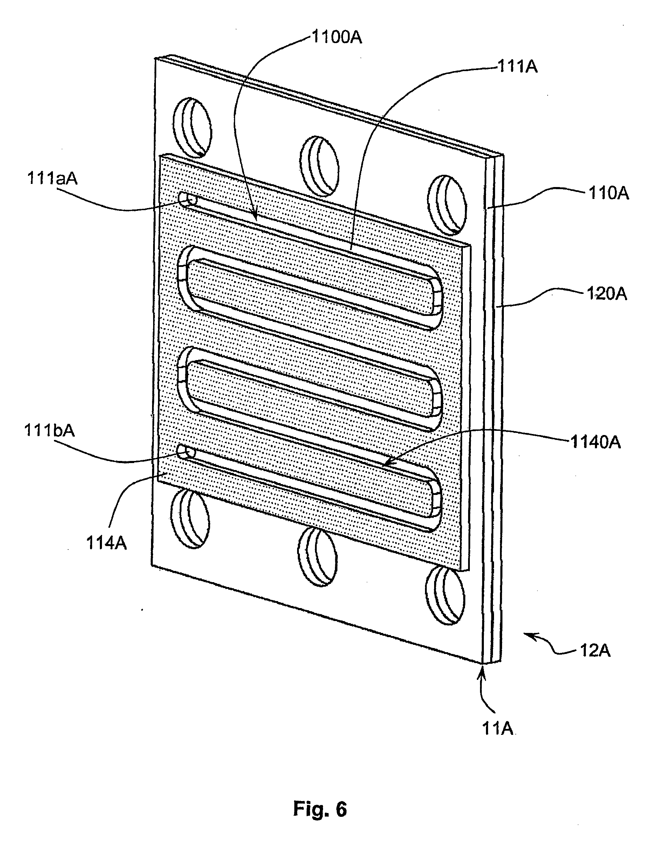

A la figure 3, on voit un support structurel 110A destiné à faire partie d'une première plaque de distribution 11A (voir figure 6). Ce support structurel est formé d'une tôle d'aluminium anodisé. Le support structurel 110A comporte d'un côté une zone présentant trois ouvertures 31A, 32A et 33A de section relativement importante, ainsi que sur le côté opposé une autre zone présentant également trois ouvertures 34A, 35A et 36A de section relativement importante. Comme dans le premier exemple, l'ensemble des ouvertures 31A, 32A, 33A, 34A, 35A et 36A forme des nourrices pour l'acheminement et l'évacuation des gaz.

Le support structurel 110A comporte un orifice 111 aA traversant l'épaisseur de la première plaque de distribution 11A et comporte un orifice 111bA traversant lui aussi la première plaque de distribution 11A. Ces orifices 111aA et 111bA sont le début et la fin d'un canal de distribution comme on le comprendra bien dans la suite.

Le support structurel 110A comporte encore une multitude de perçages 3A. Les ouvertures, orifices et perçages décrits ci-dessus sont par exemple réalisés par poinçonnage. Après poinçonnage, la tôle d'aluminium est anodisée pour une présenter une excellente insensibilité chimique et en même temps devenir non conductrice en surface, y compris sur toutes les tranches de la tôle (ouvertures 31A, 32A, 33A, 34A, 35A et 36A, orifices 111aA et 111bA, perçages 3A), donc y compris en surface faisant partie des nourrices pour les gaz et le fluide de refroidissement et cette dernière caractéristique est particulièrement avantageuse car elle ouvre la possibilité d'utiliser un liquide de refroidissement conducteur de l'électricité. Bien entendu, le caractère non conducteur en surface ne présente pas d'intérêt particulier pour les perçages 3A mais ne nuit en aucune façon.

A la figure 4, on voit un outil d'injection 4 comportant une tête 41 pourvue d'un certain nombre de cônes 42 d'injection. On voit également un piston 43 d'injection, ainsi qu'un contre moule 44. Entre la tête d'injection 41 et le contre moule 44 sont montées un support structurel 110A et un support structurel 120A. Ces supports structurels 110A et 120A font chacun partie d'une plaque de distribution, à savoir respectivement la première plaque de distribution 11A et une seconde plaque de distribution 12A. A l'instar de ce qui a été exposé pour le premier exemple de réalisation, la seconde plaque de distribution 12A comporte un canal interne 122A, tracé pour répartir sur la totalité de la section utile S de la seconde plaque de distribution 12A le fluide de refroidissement utilisé pour réguler la pile à combustible en température. On ne reviendra pas sur tous les détails de réalisations communs aux deux variantes exposées dans ce mémoire.

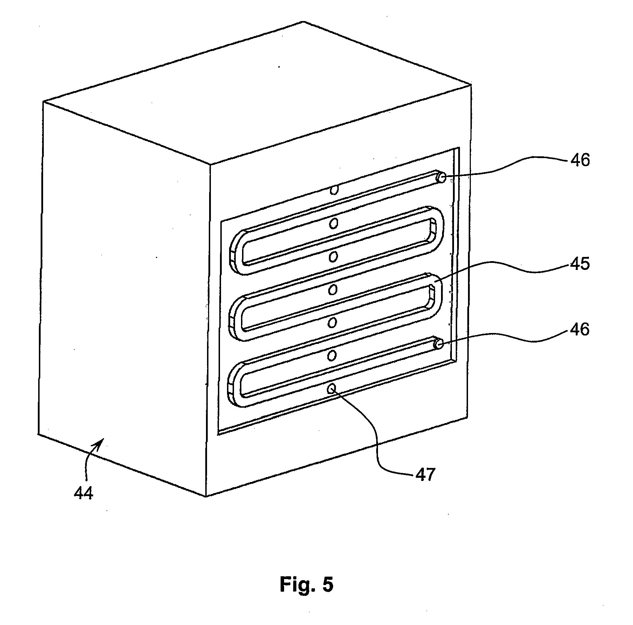

Le contre moule 44, visible en perspective à la figure 5, comporte une nervure 45 formant le négatif d'un canal de distribution 111A à former sur la plaque de distribution 11A. On voit en particulier des protubérances 46 destinées à être engagées dans les orifices 111aA et 111bA du support structurel 110A. On voit aussi des orifices 47 judicieusement placés pour évacuer l'excès de matière lors de chaque injection.

La figue 6 illustre l'état de la plaque de distribution 11A telle qu'elle résulte du procédé d'injection expliqué ci-dessus. On reconnaît le support structurel 110A et la couche de surface 114A surmoulée. A la figure 4, on voit la couche de surface 114A surmoulée sur le support structurel 110A et la couche de surface 124A surmoulée sur le support structurel 120A. On aperçoit les orifices 111aA et 111bA et le canal de distribution 111A formé par la surface 1100A dudit support structurel, les côtés 1140A dudit canal de distribution étant formés par ladite couche de surface. Il convient ensuite de procéder à un surmoulage d'une matière non conductrice de l'électricité et inerte chimiquement par-dessus la périphérie du support structurel tout autour de la couche de surface, pour que l'ensemble de la plaque de distribution présente une épaisseur homogène.

Enfin, signalons un avantage très intéressant des deux variantes de la présente invention décrites ci-dessus. Du fait que la partie des plaques bipolaires conductrice de l'électricité ne croise aucun des canaux, en particulier ne croise pas le canal interne dans lequel circule le fluide de refroidissement, il n'y a plus de mise à la masse par le ou les circuits de fluide. Il n'y a donc plus à les isoler de la masse ou à utiliser comme fluide de refroidissement un fluide non conducteur. Un mélange d'eau et de glycol classique, tel que celui utilisé pour refroidir les moteurs à combustion interne, convient parfaitement.

## Revendications

1. Plaque de distribution (11) ayant une première face (11l) destinée à être mise en contact avec une membrane de diffusion de l'un des gaz utilisé par une pile à combustible, ayant une seconde face (11r) opposée à la ladite première face (11l), ladite plaque de distribution présentant une épaisseur donnée et présentant une section utile (S) destinée à être installée en regard d'une membrane échangeuse d'ions, comportant sur la première face une rainure formant un premier canal (111) de distribution pour l'un des gaz, ledit premier canal de distribution étant sensiblement réparti sur toute la section utile de ladite première face, **caractérisée en ce que** ladite plaque de distribution est formée d'un support structurel non conducteur de l'électricité au moins en surface et inerte chimiquement au moins en surface, **en ce que** ladite plaque de distribution comporte des pions (10) pénétrant dans le support structurel , la projection desdits pions sur ladite première face ne recoupant pas ledit premier canal, lesdits pions étant réalisés en matériau non métallique conducteur de l'électricité, ladite plaque comportant dans son épaisseur un canal interne (122) ayant un tracé parcourant sensiblement toute la section utile et ne débouchant ni sur la première face ni sur la seconde face dans ladite section utile, ledit canal interne étant prévu pour la circulation d'un fluide de refroidissement et l'ensemble des surfaces en contact avec le liquide de refroidissement étant non conductrices de l'électricité.

2. Plaque de distribution selon la revendication 1, dans laquelle les pions sont réalisés dans un matériau compris dans le groupe comportant le graphite, un polymère fortement chargé de noir de carbone et un polymère chargé de fibres courtes de noir de carbone.

3. Plaque de distribution selon l'une des revendications 1 ou 2, **caractérisée en ce que** le support structurel est réalisé en matériau non conducteur de l'électricité.

4. Plaque de distribution selon l'une des revendications 3, **caractérisée en ce que** le matériau du support structurel est une matière plastique.

5. Plaque de distribution selon l'une des revendications 1 ou 2, **caractérisée en ce que** le matériau du support structurel est de l'aluminium passivé en surface.

6. Plaque de distribution selon la revendication 1, dans laquelle les pions sont réalisés dans un matériau injectable.

7. Plaque de distribution selon la revendication 6, dans laquelle les pions sont réalisés dans un matériau injectable, comportant du côté de la première face une couche de surface réalisée dans le même matériau que les pions, le fond dudit premier canal de distribution étant formé par la surface dudit support structurel, les côtés dudit premier canal de distribution étant formés par ladite couche de surface.

8. Plaque de distribution selon l'une des revendications 1 à 6 dans laquelle lesdits pions (10) débouchent de part et d'autre sur chacune desdites première et seconde face dans la section utile,

9. Plaque de distribution selon la revendication 1, formant une plaque bipolaire (1), la seconde face (12r) étant destinée à être mise en contact avec une membrane de diffusion de l'autre des gaz utilisé par une pile à combustible, comportant sur la seconde face une rainure formant un deuxième canal de distribution (121) pour l'autre des gaz, ledit deuxième canal de distribution étant sensiblement réparti sur toute la section utile à la seconde face.

10. Plaque de distribution selon l'une des revendications 2 ou 3, **caractérisée en ce qu'**elle comporte une première plaque de distribution (11) et une deuxième plaque de distribution (12) superposées dans ladite épaisseur, ledit premier canal (111) étant aménagé sur la première plaque de distribution, lesdits deuxième canal et canal interne (122) étant aménagés sur la deuxième plaque de distribution.

11. Plaque de distribution selon l'une des revendications 1 à 4, dans laquelle lesdits pions sont répartis sur toute la section utile.

## Patentansprüche

1. Verteilungsplatte (11), die eine erste Fläche (111), die dazu bestimmt ist, mit einer Membran für die Diffusion eines der Gase, das von einer Brennstoffzelle verwendet wird, in Kontakt gebracht zu werden, und eine zweite Fläche (11r) gegenüber der ersten Fläche (111) besitzt, wobei die Verteilungsplatte eine gegebene Dicke hat und einen Nutzabschnitt (S), der dazu bestimmt ist, gegenüber einer Ionenaustauschmembran installiert zu werden, aufweist, der auf der ersten Fläche eine Rinne enthält, die einen ersten Kanal (111) für die Verteilung eines der Gase bildet, wobei der erste Verteilungskanal im Wesentlichen auf dem gesamten Nutzabschnitt der ersten Fläche verteilt ist, **dadurch gekennzeichnet, dass** die Verteilungsplatte aus einem Strukturträger gebildet ist, der wenigstens auf der Oberfläche nicht elektrisch leitend ist und wenigstens auf der Oberfläche chemisch träge ist, dass die Verteilungsplatte Stifte (10) aufweist, die in den Strukturträger eindringen, wobei sich die auf der ersten Fläche vorstehenden Stifte nicht mit dem ersten Kanal überschneidet, wobei die Stifte aus einem elektrisch leitenden, nicht metallischen Material verwirklicht sind, wobei die Platte in ihrer Dicke einen inneren Kanal (122) aufweist, der einen Verlauf hat, der im Wesentlichen durch den gesamten Nutzabschnitt verläuft und weder auf der ersten Fläche noch auf der zweiten Fläche in den Nutzabschnitt mündet, wobei der innere Kanal für die Zirkulation eines Kühlungsfluids vorgesehen ist und alle Oberflächen, die mit dem Kühlungsfluid in Kontakt sind, elektrisch nicht leitend sind.

2. Verteilungsplatte nach Anspruch 1, wobei die Stifte aus einem Material verwirklicht sind, das in der Gruppe enthalten ist, die Graphit, ein stark mit Rußschwarz angereichertes Polymer und ein mit kurzen Rußschwarzfasern angereichertes Polymer enthält.

3. Verteilungsplatte nach einem der Ansprüche 1 oder 2, **dadurch gekennzeichnet, dass** der Strukturträger aus einem elektrisch nicht leitenden Material verwirklicht ist.

4. Verteilungsplatte nach Anspruch 3, **dadurch gekennzeichnet, dass** das Material des Strukturträgers ein Kunststoff ist.

5. Verteilungsplatte nach einem der Ansprüche 1 oder 2, **dadurch gekennzeichnet, dass** das Material des Strukturträgers oberflächenpassiviertes Aluminium ist.

6. Verteilungsplatte nach Anspruch 1, wobei die Stifte aus einem einspritzbaren Material verwirklicht sind.

7. Verteilungsplatte nach Anspruch 6, wobei die Stifte aus einem einspritzbaren Material verwirklicht sind, das auf der Seite der ersten Fläche eine Oberflächenschicht aufweist, die aus dem gleichen Material wie die Stifte verwirklicht ist, wobei der Boden des ersten Verteilungskanals durch die Oberfläche des Strukturträgers gebildet ist und die Seiten des ersten Verteilungskanals durch die Oberflächenschicht gebildet sind.

8. Verteilungsplatte nach einem der Ansprüche 1 bis 6, wobei die Stifte (10) beiderseits auf jeder der ersten und der zweiten Fläche in den Nutzabschnitt münden.

9. Verteilungsplatte nach Anspruch 1, die eine bipolare Platte (1) bildet, wobei die zweite Fläche (12r) dazu bestimmt ist, mit einer Membran für die Diffusion des Anderen der von einer Brennstoffzelle verwendeten Gase in Kontakt gebracht zu werden, die auf der zweiten Fläche eine Rinne aufweist, die einen zweiten Kanal (121) für die Verteilung des Anderen der Gase bildet, wobei der zweite Verteilungskanal im Wesentlichen auf dem gesamten Nutzabschnitt der zweiten Fläche verteilt ist.

10. Verteilungsplatte nach einem der Ansprüche 2 oder 3, **dadurch gekennzeichnet, dass** sie eine erste Verteilungsplatte (11) und eine zweite Verteilungsplatte (12), die in Dickenrichtung übereinander liegen, umfasst, wobei der erste Kanal (111) in der ersten Verteilungsplatte ausgebildet ist und wobei der zweite Kanal und der innere Kanal (122) in der zweiten Verteilungsplatte ausgebildet sind.

11. Verteilungsplatte nach einem der Ansprüche 1 bis 4, wobei die Stifte auf dem gesamten Nutzabschnitt verteilt sind.

## Claims

1. Distribution plate (11) having a first face (11l) intended to be brought into contact with a membrane for diffusing one of the gases used by a fuel cell, having a second face (11r) opposite said first face (11l), said distribution plate having a given thickness and having a working section (S) intended to be installed opposite an ion exchange membrane, comprising on the first face a groove forming a first distribution channel (111) for one of the gases, said first distribution channel being approximately spread over the entire working section of said first face, **characterized in that** said distribution plate is formed from a structural support that does not conduct electricity, at least on the surface, and that is chemically inert, at least on the surface, **in that** said distribution plate comprises pins (10) that penetrate into the structural support, the projection of said pins through said first face not intersecting said first channel, said pins being produced from a non-metallic material that conducts electricity, said distribution plate comprising in its thickness an inner channel (122) having a layout covering approximately the entire working section and not emerging either on the first face or on the second face in said working section, said inner channel being provided for the circulation of a coolant and all surfaces in contact with the coolant being non-conductive of electricity.

2. Distribution plate according to Claim 1, in which the pins are produced from a material from the group comprising graphite, a polymer highly filled with carbon black and a polymer filled with short carbon black fibres.

3. Distribution plate according to one of Claims 1 or 2, **characterized in that** the structural support is produced from a material that does not conduct electricity.

4. Distribution plate according to Claims 3, **characterized in that** the structural support material is a plastic.

5. Distribution plate according to one of Claims 1 or 2, **characterized in that** the structural support material is surface-passivated aluminium.

6. Distribution plate according to Claim 1, in which the pins are produced from an injection-mouldable material.

7. Distribution plate according to Claim 6, in which the pins are produced from an injection-mouldable material, comprising on the side of the first face a surface layer produced from the same material as the pins, the bottom of said first distribution channel being formed by the surface of said structural support, the sides of said first distribution channel being formed by said surface layer.

8. Distribution plate according to one of Claims 1 to 6, in which said pins (10) emerge on both sides through each of said first and second faces in the working section.

9. Distribution plate according to Claim 1, forming a bipolar plate (1), the second face (12r) being intended to be brought into contact with a membrane for diffusing the other of the gases used by a fuel cell, comprising on the second face a groove forming a second distribution channel (121) for the other of the gases, said second distribution channel being approximately spread over the entire working section on the second face.

10. Distribution plate according to one of Claims 2 or 3, **characterized in that** it comprises a first distribution plate (11) and a second distribution plate (12) superposed in said thickness, said first channel (111) being laid out over the first distribution plate, said second channel and inner channel first channel (122) being laid out over the second distribution plate.

11. Distribution plate according to one of Claims 1 to 4, in which said pins are spread over the entire working section.
